(19) Europäisches Patentamt
European Patent Office
Office européen des brevets

(11) EP 0 664 597 B1

(12) EUROPÄISCHE PATENTSCHRIFT

(45) Veröffentlichungstag und Bekanntmachung des Hinweises auf die Patenterteilung:
16.09.1998 Patentblatt 1998/38

(51) Int Cl.⁶: **H02J 3/01**, H02J 3/18

(21) Anmeldenummer: **95810038.0**

(22) Anmeldetag: **20.01.1995**

(54) **Vorrichtung zum Kompensieren der höheren Harmonischen und/oder des Leistungsfaktors einer an ein Wechselspannungsnetz angeschlossenen nichtlinearen Last**

Device for compensating high harmonics and/or the power factor of a non linear load connected to an alternative power network

Dispositif de compensation des harmoniques élevés et/ou du facteur de puissance d'une charge non linéaire branchée à un réseau alternatif

(84) Benannte Vertragsstaaten:
**CH DE FR GB LI**

(30) Priorität: **25.01.1994 DE 9401204 U**

(43) Veröffentlichungstag der Anmeldung:
**26.07.1995 Patentblatt 1995/30**

(73) Patentinhaber: **THOMCAST AG**
**5300 Turgi (CH)**

(72) Erfinder:
• **Puri, Narindra Nath, Prof. Dr.,**
**Monmouth Junction, New Jersey (US)**
• **Gehri, Patrick**
**CH-5223 Riniken (CH)**
• **Tomljenovic, Nenad**
**CH-5415 Nussbaumen (CH)**

(74) Vertreter: **Hug Interlizenz AG**
**Nordstrasse 31,**
**Postfach 127**
**8035 Zürich (CH)**

(56) Entgegenhaltungen:
**EP-A- 0 431 967**          **WO-A-94/10743**
**US-A- 4 906 860**          **US-A- 5 287 288**

• **PATENT ABSTRACTS OF JAPAN vol. 94, no. 010 & JP-A-06 284576 (MEIDENSHA CORP), 7. Oktober 1994,**
• **PATENT ABSTRACTS OF JAPAN vol. 17, no. 646 (E-1467), 30. November 1993 & JP-A-05 207659 (MITSUBISHI), 13. August 1993,**
• **PATENT ABSTRACTS OF JAPAN vol. 14, no. 303 (P-1070), 29. Juni 1990 & JP-A-02 096815 (NISSIN ELECTRIC ), 9. April 1990,**

**Beschreibung**

TECHNISCHES GEBIET

Die vorliegende Erfindung bezieht sich auf das Gebiet Leistungselektronik. Sie betrifft eine Vorrichtung zum Kompensieren der höheren Harmonischen und/oder des Leistungsfaktors einer an ein Wechselspannungsnetz angeschlossenen nichtlinearen Last, welche Vorrichtung einen in Serie mit der Last liegenden Stromsensor, eine zwei Eingänge aufweisende Signalverarbeitungseinheit und eine Leistungseinheit umfasst, wobei der erste Eingang der Signalverarbeitungseinheit mit dem Ausgang des Stromsensors verbunden ist, und die an der Last abfallende Lastspannung auf den zweiten Eingang der Signalverarbeitungseinheit gegeben wird, und wobei der Ausgang der Signalverarbeitungseinheit mit dem Eingang der Leistungseinheit verbunden ist und die Leistungseinheit an ihrem Ausgang ein Korrektursignal zur Kompensation der höheren Harmonischen und/oder des Leistungsfaktors abgibt.

Eine solche Vorrichtung ist z.B. aus dem Artikel von Richard S. Burwen, IEEE Spectrum, February 1993, S. 32-37, bekannt.

STAND DER TECHNIK

Mit der Weiterentwicklung der Leistungselektronik werden in zunehmendem Masse Stromversorgungen eingesetzt, die aufgrund ihrer Arbeitsweise mit geschalteten Leistungshalbleitern nichtlineare Lasten für das Versorgungsnetz darstellen und dementsprechend nicht nur harmonische Stromkomponenten erzeugen, sondern auch einen von 1,0 abweichenden Leistungsfaktor (cos $\varphi$) zur Folge haben. Wenn die harmonischen Stromkomponenten nicht kompensiert werden, erzeugen sie in Wechselwirkung mit der Impedanz der Quelle unerwünschte nicht-sinusförmige Spannungen im Netz. Elektronische Lasten verursachen oft auch Stromformen, bei welchen die "Total Harmonic Distortion" (THD) zwischen 70 und 100 % liegt und "crest factors" von 2 bis 3 nicht unüblich sind. Oft werden harmonische Ströme erzeugt, deren Amplitude in der gleichen Grössenordnung liegt, wie die der Grundwelle.

Alle diese Effekte können zu Störungen anderer Verbraucher führen, zur Beeinflussung von benachbarten Netzen, übermässiger Erwärmung von einzelnen Phasenleitern und neutralem Leiter, zusätzlichen Verlusten in Transformatoren und anderen Geräten, dem Ansprechen von Schaltern, Interferenzen mit Telephonleitungen etc.

In der Vergangenheit wurden überwiegend passive Techniken wie z.B. "trap"-Filter mit Kondensatorbänken, zur Kompensation derartiger Verzerrungen verwendet. Selbstverständlich sind diese Methoden nicht-adaptiv, nicht-umfassend und wenig effektiv, d.h. sie können nur begrenzt an sich ändernde Bedingungen angepasst werden und erlauben nur in einem begrenzten Umfang eine Kompensation bzw. Korrektur.

Es sind deshalb auch bereits adaptive Korrekturmethoden vorgeschlagen worden, die beispielsweise unter dem Stichwort "active filter" oder "active power line conditioner" (S. A. Lane und R. M. Petrecca, Power Quality, September 1992 Proceedings, S. 311-323, (1992)) bekannt sind. Bei diesen Methoden werden geschaltete Filter, die zwischen dem Netz und der nichtlinearen Last angeordnet sind, dazu verwendet, einen Korrekturstrom zu erzeugen, der dafür sorgt, dass im wesentlichen nur noch die Grundschwingung des Stromes aus dem Netz direkt entnommen wird, während die höheren Harmonischen vom Filter selbst bereitgestellt werden.

Obgleich die geschalteten Filter einen grösseren Anpassungsspielraum haben als die passiven Systeme, müssen sie dennoch auf die jeweilige Anwendung zugeschnitten werden und erlauben aufgrund ihres inneren Aufbaus nur eine vergleichsweise grobe Korrektur, da hier nur mit wenigen (in Brückenschaltung angeordneten) Leistungsschaltern gearbeitet wird, die über ihren Zündzeitpunkt gesteuert werden. Darüber hinaus ist es schwierig, mit derartigen Systemen eine Verbesserung des Leistungsfaktors zu erreichen.

Aus dem eingangs genannten Artikel von Richard S. Burwen ist eine mit einem PWM-Leistungsverstärker ausgestattete, rückgekoppelte Korrekturschaltung für Harmonische bekannt, bei der Strom und Spannung direkt am Netzausgang gemessen und aus den Messwerten in einer Signalverarbeitungsschaltung ein Korrektursignal erzeugt, das Korrektursignal in dem nachfolgenden Leistungsverstärker zu einer Korrekturgrösse verstärkt, und die Korrekturgrösse über einen Transformator parallel zur Last eingespeist wird. Diese Art der Regelschleife wird sowohl für die Kompensation der Harmonischen als auch für die Korrektur des Leistungsfaktors vorgeschlagen, wobei über die Art der Signalbildung keine Aussagen gemacht werden. Nachteilig ist hierbei, dass die Regelschleife in ihrem Regelverhalten, z.B. der Regelschnelligkeit, der Stabilität oder der Regelgenauigkeit, an den jeweiligen Anwendungsfall angepasst sein muss, was zu Einschränkungen in der Flexibilität führt.

DARSTELLUNG DER ERFINDUNG

Es ist daher Aufgabe der Erfindung, eine Vorrichtung anzugeben, mit welchen die Rückwirkung einer nichtlinearen Last auf das Netz, insbesondere durch Erzeugung Harmonischer und Verschlechterung des Leistungsfaktors, auf besonders einfache Weise sicher und flexibel kompensiert werden kann.

Die Aufgabe wird bei einer Vorrichtung der eingangs genannten Art dadurch gelöst, dass der Stromsensor direkt vor der Last angeordnet ist und den Laststrom misst, dass die Signalverarbeitungseinheit erste Mittel zur Erzeugung der Quadraturkomponente der Grundfrequenz des Laststromes sowie zweite Mittel zur Erzeugung der höheren Harmonischen des Laststromes umfasst, dass in der Leistungseinheit dritte Mittel vorgesehen sind, welche am Ausgang der Leistungseinheit die leistungsverstärkte Summe der beiden Signale aus den ersten und zweiten Mitteln bereitstellen, und dass Korrektursignal zwischen dem Wechselspannungsnetz und dem Stromsensor eingespiesen wird.

Der Kern der Erfindung besteht darin, die Quadraturkomponente der Grundfrequenz des Laststromes sowie die höheren Harmonischen einzeln aus den gemessenen Grössen abzuleiten, einer Leistungsverstärkung zuzuführen und zusammen als Korrektursignal dem aus dem Netz gezogenen Strom zuzuaddieren. Damit ist gewährleistet, dass dem Netz nur die phasenrichtige Komponente der Grundfrequenz entnommen wird.

Eine erste Ausführungsform der Vorrichtung nach der Erfindung zeichnet sich dadurch aus, dass die ersten Mittel einen ersten Multiplizierer einen nachfolgenden ersten Mittelwertbildner, einen nachfolgenden zweiten Multiplizierer und eine Referenzschwingungs-Erzeugerschaltung umfassen, welche Referenzschwingungs-Erzeugerschaltung an zwei Ausgängen die um 90° phasenverschobene Netzgrundschwingung sowie deren mit dem Faktor 2 multiplizierten Wert zur Verfügung stellt, dass der erste Multiplizierer mit seinem ersten Eingang an den ersten Eingang der Signalverarbeitungseinheit und mit seinem zweiten Eingang an den ersten Ausgang der Referenzschwingungs-Erzeugerschaltung angeschlossen ist, dass der Ausgang des ersten Multiplizierers mit dem Eingang des ersten Mittelwertbildners verbunden ist, dass der Ausgang des ersten Mittelwertbildners an den ersten Eingang des zweiten Multiplizierers angeschlossen ist, dass der zweite Eingang des zweiten Multiplizierers mit dem zweiten Ausgang der Referenzschwingungs-Erzeugerschaltung verbunden ist, und dass der Eingang der Referenzschwingungs-Erzeugerschaltung an den zweiten Eingang der Signalverarbeitungseinheit angeschlossen ist.

Eine zweite Ausführungsform der erfindungsgemässen Vorrichtung ist dadurch gekennzeichnet, dass die zweiten Mittel einen dritten Multiplizierer, einen nachfolgenden zweiten Mittelwertbildner, einen nachfolgenden vierten Multiplizierer, sowie einen Addierer und einen Subtrahierer umfassen, dass die Referenzschwingungs-Erzeugerschaltung an zwei weiteren Ausgängen die Netzgrundschwingung sowie deren mit dem Faktor 2 multiplizierten Wert zur Verfügung stellt, dass der dritte Multiplizierer mit seinem ersten Eingang an den ersten Eingang der Signalverarbeitungseinheit und mit seinem zweiten Eingang an den dritten Ausgang der Referenzschwingungs-Erzeugerschaltung angeschlossen ist, dass der Ausgang des dritten Multiplizierers mit dem Eingang des zweiten Mittelwertbildners verbunden ist, dass der Ausgang des zweiten Mittelwertbildners an den ersten Eingang des vierten Multiplizierers angeschlossen ist, dass der zweite Eingang des vierten Multiplizierers mit dem vierten Ausgang der Referenzschwingungs-Erzeugerschaltung verbunden ist, dass der Ausgang des vierten Multiplizierers mit einem Eingang des Addierers verbunden ist, dass der andere Eingang des Addierers mit dem Ausgang des zweiten Multiplizierers verbunden ist, und dass der Subtrahierer mit seinem einen Eingang an den einen Eingang der Signalverarbeitungseinheit und mit seinem anderen Eingang an den Ausgang des ersten Addierers angeschlossen ist.

Weitere Ausführungsformen ergeben sich aus den abhängigen Ansprüchen.

KURZE ERLÄUTERUNG DER FIGUREN

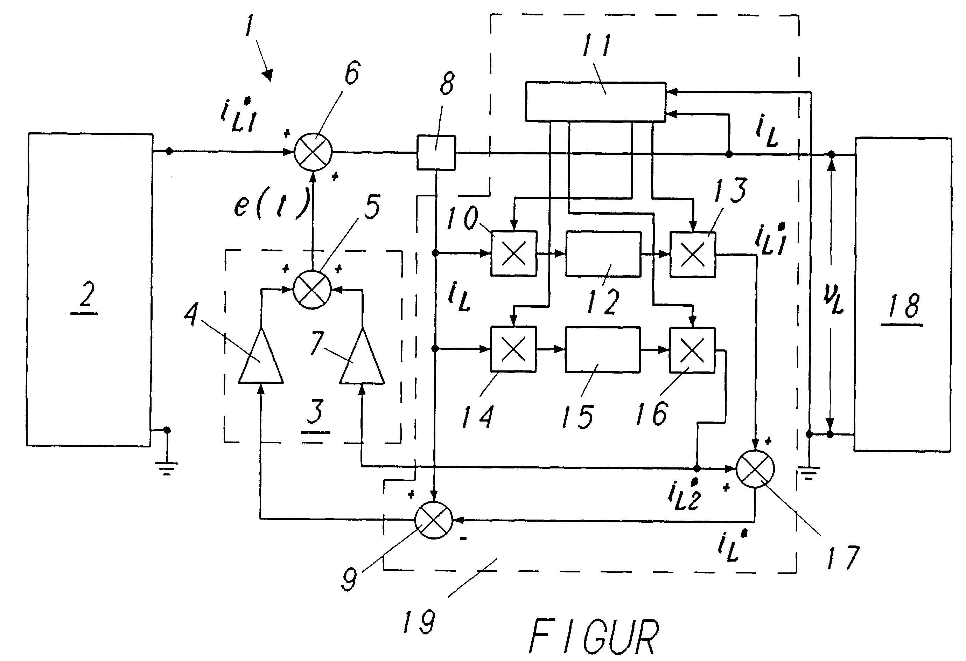

Die Erfindung soll nachfolgend anhand von Ausführungsbeispielen im Zusammenhang mit der Zeichnung näher erläutert werden. Die einzige Figur zeigt das Prinzipschaltbild eines bevorzugten Ausführungsbeispiels der erfindungsgemässen Vorrichtung.

WEGE ZUR AUSFÜHRUNG DER ERFINDUNG

In der einzigen Figur ist in einem Prinzipschaltbild ein bevorzugtes Ausführungsbeispiel der erfindungsgemässen Vorrichtung wiedergegeben. Eine nichtlineare Last 18, beispielsweise die geschaltete Stromversorgung eines Datenverarbeitungsgerätes oder dgl., ist an ein Wechselspannungsnetz 2 angeschlossen, welches eine Netzspannung mit einer Netzfrequenz $\omega_0$ zur Verfügung stellt. Die Netzspannung, die gleich der an der Last 18 abfallenden Lastspannung $v_L$ ist, treibt einen Laststrom $i_L$ durch die Last 18, der aufgrund der nichtlinearen Eigenschaften der Last einen von 1,0 verschiedenen Leistungsfaktor $\cos\varphi$, und/oder höhere Harmonische der Grundfrequenz $\omega_0$ aufweist. Der Laststrom kann beschrieben werden durch die Gleichung

$$(1) \qquad i_L(t) = I(t)\sin(\omega_0 t - \varphi((t)) + HOH$$

mit der zeitlich langsam variierenden Amplitude $I(t)$ und Phasenverschiebung $\varphi(t)$ sowie den höheren Harmonischen HOH (Higher Order Harmonics). Diese Gleichung kann auch geschrieben werden als

$$(2) \qquad i_L(t)=I(t)\sin(\omega_0 t)\cos\varphi(t)-I(t)\cos(\omega_0 t)\sin\varphi(t) + HOH$$

Dieser Laststrom wird nun mittels eines Stromsensors 8 gemessen, der zwischen der Last 18 und dem Wechselspannungsnetz 2 angeordnet ist. Das erhaltenen Messsignal ($i_L$) wird auf einen ersten Eingang einer Signalverarbeitungseinheit 19 gegeben, die mit einem zweiten Eingang die an der Last abfallende Lastspannung $v_L$ misst.

Aus der Lastspannung $v_L$ werden in einer Referenzschwingungs-Erzeugerschaltung 11 die Funktionen $\sin\omega_0 t$, $2\sin\omega_0 t$ sowie $\cos\omega_0 t$, $2\cos\omega_0 t$ erzeugt und an vier verschiedenen Ausgängen bereitgestellt. Jede dieser Funktionen wird auf den einen Eingang eines zugeordneten Multiplizierers gegeben, der innerhalb der Signalverarbeitungseinheit 19 angeordnet ist. Die Funktion $\cos\omega_0 t$ gelangt auf den einen Eingang eines ersten Multiplizierers 14, die Funktion $2\cos\omega_0 t$ auf den einen Eingang eines zweiten Multiplizierers 16, die Funktion $\sin\omega_0 t$ auf den einen Eingang eines dritten Multiplizierers 10, und die Funktion $2\sin\omega_0 t$ auf den einen Eingang eines vierten Multiplikators 13. Der erste und zweite Multiplizierer 14 bzw. 16 sowie der dritte und vierte Multiplizierer 10 bzw. 13 sind jeweils hintereinandergeschaltet. Zwischen dem ersten und zweiten Multiplizierer 14 bzw. 16 ist ein erster Mittelwertbildner 15 vorgesehen, zwischen dem dritten und vierten Multiplizierer 10 bzw. 13 ein zweiter Mittelwertbildner 12. Die beiden Mittelwertbildner 15 bzw. 12 bilden jeweils das zeitliche Mittel über die am Ausgang des ersten bzw. dritten Multiplizierers 14 bzw. 10 auftretenden Signale.

Die Funktion $i_L$ aus dem Stromsensor wird auf den anderen Eingang des ersten Multiplizierers 14 gegeben und dort mit $\cos\omega_0 t$ multipliziert. Durch die nachfolgende Mittelwertbildung werden die HOH und die gemischten Glieder herausgemittelt, so dass am Ausgang des ersten Mittelwertbildners 15 die Funktion

$$(3) \qquad -\frac{1}{2}I(t)\sin\varphi(t)$$

zur Verfügung steht. Diese Funktion wird im nachfolgenden zweiten Multiplizierer 16 mit der Grösse $2\cos\omega_0 t$ multipliziert, so dass sich am Ausgang des zweiten Multiplizierers 16 die Quadraturkomponente der Laststrom-Grundfrequenz zu

$$(4) \qquad i_{L2}^* = -I(t)\sin \varphi(t)\cos\omega_0 t$$

ergibt.

In den aus den Multiplizierern 10 und 13 sowie dem zweiten Mittelwertbildner 12 bestehenden Signalverarbeitungszweig wird $i_L$ zunächst mit $\sin\omega_0 t$ multipliziert, das Produkt dann zeitlich gemittelt und das zeitliche Mittel anschliessend mit $2\sin\omega_0 t$ multipliziert. Am Ausgang des vierten Multiplizierers 13 ergibt sich dann die phasenrichtige Laststrom-Grundfrequenzkomponente zu

$$(5) \qquad i_{L1}^* = I(t)\cos\varphi(t)\sin\omega_0 t \ .$$

beide Komponenten werden anschliessend in einem ersten Addierer 17 addiert und ergeben so den gesamten Grundfrequenzanteil des Laststromes $i_L$. Dieser Grundfrequenzanteil wird in einem Subtrahierer 9 von der Grösse $i_L$ abgezogen, so dass am Ausgang des Subtrahierers 9 nur die HOH verbleiben.

Die Quadraturkomponente $i^*_{L2}$ vom Ausgang des zweiten Multiplizierers 16 und die HOH vom Ausgang des Subtrahierers 9 werden getrennt aus der Signalverarbeitungseinheit 19 herausgeführt und auf entsprechende Eingänge einer Leistungseinheit 3 gegeben, wo sie einzeln in Stromverstärkern 4 bzw. 7 auf das notwendige Leistungsniveau gebracht, anschliessend in einem zweiten Addierer 5 aufaddiert und als Korrektursignal e(t) auf den einen Eingang eines dritten Addierers 6 gelangen. Der andere Eingang des dritten Addierers 6 ist mit dem Wechselspannungsnetz 2 verbunden, während der Ausgang an die Last 18 angeschlossen ist. Da die Quadraturkomponente und die HOH des Laststromes $i_L$ als Korrektursignal e(t) aus der Leistungseinheit 3 stammen, wird dem Wechselspannungsnetz 2 direkt nur die phasenrichtige Grundfrequenzkomponente $i^*_{L1}$ entnommen, so dass Leistungsfaktor und/oder höhere Harmonische kompensiert sind. Es versteht sich von selbst, dass die komplette Schaltung aus der Figur nur für den Fall gebraucht wird, dass eine Kompensation sowohl hinsichtlich der höheren Harmonischen als auch hinsichtlich des Leistungsfaktors durchgeführt werden muss. Ist dagegen nur der Leistungsfaktor zu korrigieren, können die Schaltungsblöcke 4, 5, 9, 10, 12, 13 und 17 weggelassen werden. Sind andererseits nur die höheren Harmonischen zu kompensieren, können die Schaltungsblöcke 5 und 7 weggelassen werden. Selbstverständlich ist es auch denkbar, in der Leistungseinheit 3 oder vorher die Signale aus dem Subtrahierer 9 und dem zweiten Multiplizierer 16 zu addieren und das Summensignal dann in der Leistungseinheit 3 in einem einzigen Stromverstärker zu verstärken.

Zusätzliche Flexibilität hinsichtlich der Anlagekosten lässt sich bei der beschriebenen Schaltung dadurch erzielen, dass der Hauptteil der reaktiven Leistung durch einen statischen Kompensator (wie z.B. ein abgestimmtes Filter mit L- und C-Komponenten) aufgebracht wird, während die Feinabstimmung des Leistungsfaktors sowie die Kompensation der höheren Harmonischen separat in der oben beschriebenen Weise geschieht.

Die Schaltung kann in weiten Teilen unter Einsatz moderner Logikschaltungen digital aufgebaut werden. Besonders einfach lässt sich die Vorrichtung jedoch realisieren, wenn die einzelnen Schaltungsteile als analog arbeitende Teile ausgebildet sind.

BEZEICHNUNGSLISTE

| 1 | Kompensationsvorrichtung |
| 2 | Wechselspannungsnetz |
| 3 | Leistungseinheit |
| 4,7 | Stromverstärker |
| 5,6 | Addierer |
| 8 | Stromsensor |
| 9 | Subtrahierer |
| 10,13 | Multiplizierer |
| 11 | Referenzschwingungs-Erzeugerschaltung |
| 12,15 | Mittelwertbildner |
| 14,16 | Multiplizierer |
| 17 | Addierer |
| 18 | Last (nichtlinear) |
| 19 | Signalverarbeitungseinheit |
| $e(t)$ | Korrektursignal |
| $i_L$ | Laststrom |
| $i^*_{L1}$ | phasenrichtige Grundfrequenzkomponente |
| $i^*_{L2}$ | Quadraturkomponente |
| $i^*_L$ | Summenstrom |
| $v_L$ | Lastspannung |

**Patentansprüche**

1. Vorrichtung zum Kompensieren der höheren Harmonischen und/oder des Leistungsfaktors einer an ein Wechselspannungsnetz (2) angeschlossenen nichtlinearen Last (18), welche Vorrichtung (1) einen in Serie mit der Last (18) liegenden Stromsensor (8), eine zwei Eingänge aufweisende Signalverarbeitungseinheit (19) und eine Leistungseinheit (3) umfasst, wobei der erste Eingang der Signalverarbeitungseinheit (19) mit dem Ausgang des Stromsensors (8) verbunden ist, und die an der Last (18) abfallende Lastspannung ($v_L$) auf den zweiten Eingang der Signalverarbeitungseinheit (19) gegeben wird, und wobei der Ausgang der Signalverarbeitungseinheit (18) mit dem Eingang der Leistungseinheit (3) verbunden ist und die Leistungseinheit (3) an ihrem Ausgang ein Korrektursignal (e(t)) zur Kompensation der höheren Harmonischen und/oder des Leistungsfaktors abgibt, dadurch gekennzeichnet, dass der Stromsensor (8) direkt vor der Last (18) angeordnet ist und den Laststrom ($i_L$) misst, dass die Signalverarbeitungseinheit (19) erste Mittel zur Erzeugung der Quadraturkomponente ($i^*_{L2}$) der Grundfrequenz des Laststromes ($i_L$) sowie zweite Mittel zur Erzeugung der höheren Harmonischen des Laststromes ($i_L$) umfasst, dass in der Leistungseinheit (3) dritte Mittel vorgesehen sind, welche am Ausgang der Leistungseinheit (3) die leistungsverstärkte Summe der beiden Signale aus den ersten und zweiten Mitteln bereitstellen, und dass das Korrektursignal (e(t)) zwischen dem Wechselspannungsnetz (2) und dem Stromsensor (8) eingespiesen wird (6).

2. Vorrichtung nach Anspruch 1, dadurch gekennzeichnet, dass die ersten Mittel einen ersten Multiplizierer (14) einen nachfolgenden ersten Mittelwertbildner (15), einen nachfolgenden zweiten Multiplizierer und eine Referenzschwingungs-Erzeugerschaltung (11) umfassen, welche Referenzschwingungs-Erzeugerschaltung (11) an zwei Ausgängen die um 90° phasenverschobene Netzgrundschwingung sowie deren mit dem Faktor 2 multiplizierten Wert zur Verfügung stellt, dass der erste Multiplizierer (14) mit seinem ersten Eingang an den ersten Eingang der Signalverarbeitungseinheit (19) und mit seinem zweiten Eingang an den ersten Ausgang der Referenzschwingungs-Erzeugerschaltung (11) angeschlossen ist, dass der Ausgang des ersten Multiplizierers (14) mit dem Eingang des ersten Mittelwertbildners (15) verbunden ist, dass der Ausgang des ersten Mittelwertbildners (15) an den ersten Eingang des zweiten Multiplizierers (16) angeschlossen ist, dass der zweite Eingang des zweiten Multiplizierers (16) mit dem zweiten Ausgang der Referenzschwingungs-Erzeugerschaltung (11) verbunden ist, und dass der Eingang der Referenzschwingungs-Erzeugerschaltung (11) an den zweiten Eingang der Signalverarbeitungseinheit (19) angeschlossen ist.

3. Vorrichtung nach Anspruch 2, dadurch gekennzeichnet, dass die zweiten Mittel einen dritten Multiplizierer (10), einen nachfolgenden zweiten Mittelwertbildner (12), einen nachfolgenden vierten Multiplizierer (13), sowie einen Addierer (17) und einen Subtrahierer (9) umfassen, dass die Referenzschwingungs-Erzeugerschaltung (11) an zwei weiteren Ausgängen die Netzgrundschwingung sowie deren mit dem Faktor 2 multiplizierten Wert zur Verfügung stellt, dass der dritte Multiplizierer (10) mit seinem ersten Eingang an den ersten Eingang der Signalverarbeitungseinheit (19) und mit seinem zweiten Eingang an den dritten Ausgang der Referenzschwingungs-Erzeugerschaltung (11) angeschlossen ist, dass der Ausgang des dritten Multiplizierers (10) mit dem Eingang des zweiten Mittelwertbildners (12) verbunden ist, dass der Ausgang des zweiten Mittelwertbildners (12) an den ersten Eingang des vierten Multiplizierers (13) angeschlossen ist, dass der zweite Eingang des vierten Multiplizierers (13) mit dem vierten Ausgang der Referenzschwingungs-Erzeugerschaltung (11) verbunden ist, dass der Ausgang des vierten Multiplizierers (13) mit einem Eingang des Addierers (17) verbunden ist, dass der andere Eingang des Addierers (17) mit dem Ausgang des zweiten Multiplizierers (16) verbunden ist, und dass der Subtrahierer (9) mit seinem einen Eingang an den einen Eingang der Signalverarbeitungseinheit (19) und mit seinem anderen Eingang an den Ausgang des Addierers (17) angeschlossen ist.

4. Vorrichtung nach Anspruch 3, dadurch gekennzeichnet, dass die dritten Mittel zwei Stromverstärker (4 bzw. 7) und einen zweiten Addierer (5) umfassen, dass die beiden Eingänge des zweiten Addierers (5) mit den Ausgängen der Stromverstärker (4, 7) verbunden sind, dass der Eingang des einen Stromverstärkers (4) an den Ausgang des zweiten Addierers (9) und der Eingang des anderen Stromverstärkers (7) an den Ausgang des zweiten Multiplizierers (16) angeschlossen sind, und dass der Ausgang des zweiten Addierers (5) mit dem Ausgang der Leistungseinheit (3) in Verbindung steht.

5. Vorrichtung nach einem der Ansprüche 1 bis 4, dadurch gekennzeichnet, dass die einzelnen Schaltungsteile der Vorrichtung (1) als analog arbeitende Teile ausgebildet sind.

## Claims

1. Device for compensating higher order harmonics and/or the power factor of a nonlinear load (18) connected to an a.c. voltage mains (2), said device (1) having a current sensor (8) in series with the load (18), a signal processing unit (19) having two inputs and a power unit (3), the first input of the first processing unit (19) being connected to the output of the current sensor (8), and the load voltage ($v_L$) dropping at the load (18) is delivered to the second input of the signal processing unit (19), and the output of the signal processing unit (19) is connected to the input of the power unit (3) which, at its output, emits a correction signal (e(t)) for compensating the higher order harmonics and/or the power factor, characterized in that the current sensor (8) is positioned directly upstream of the load (18) and measures the load curent ($i_L$), that the signal processing unit (19) comprises first means for generating a quadrature component ($i^*_{L2}$) of the fundamental frequency of the load current ($i_L$), as well as second means for generating the higher order harmonics of the load current ($i_L$), that in the power unit (3) are provided third means, which at the output of the power unit (3) provide the power-amplified sum of the two signals from the first and second means, and that the correction signal (e(t)) is fed in between the a.c. voltage mains (2) and the current sensor (8).

2. Device according to claim 1, characterized in that the first means comprise a first multiplier (14), a following first averager (15), a following second multiplier and a reference oscillation generating circuit (11), said reference oscillation generating circuit (11) making available the mains fundamental oscillation phase-shifted by 90°, as well as its value multiplied by the factor 2, that the first multiplier (14) with its first input is connected to the first input of the signal processing unit (19) and is connected with its second input to the first output of the reference oscillation generating circuit (11), that the output of the first multiplier (14) is connected to the input of the first averager (15), that the output of the first averager (15) is connected to the first input of the second multiplier (16), that the second input of the second multiplier (16) is connected to the second output of the reference oscillation generating circuit (11), and that the input of the reference oscillation generating circuit (11) is connected to the second input of the signal processing unit (19).

3. Device according to claim 2, characterized in that the second means comprise a third multiplier (10), a following second averager (12), a following fourth multiplier (13), as well as an adder (17) and a subtracter (9), that the reference oscillation generating circuit (11) makes available at two further outputs the mains fundamental oscillation, as well as its value multiplied by the factor 2, that the third multiplier (10) is connected by its first input to the first input of the signal processing unit (19) and by its second input to the third output of the reference oscillation generating circuit (11), that the output of the third multiplier (10) is connected to the input of the second averager (12), that the output of the second averager (12) is connected to the first input of the fourth multiplier (13), that the second input of the fourth multiplier (13) is connected to the fourth output of the reference oscillation generating circuit (11), that the output of the fourth multiplier (13) is connected to one input of the adder (17), that the other input of the adder (17) is connected to the output of the second multiplier (16), and that the subtracter (9) is connected by its one input to one input of the signal processing unit (19) and by its other input to the output of the first adder (17).

4. Device according to claim 3, characterized in that the third means comprise two current amplifiers (4, 7) and a second adder (5), that the two inputs of the second adder (5) are connected to the outputs of the current amplifers (4, 7), that the input of one current amplifier (4) is connected to the output of the second adder (5) and the input of the other current amplifier (7) is connected to the output of the second multiplier (16), and that the output of the second adder (5) is connected to the output of the power unit (3).

5. Device according to one of the claims 1 to 4, characterized in that the individual circuit parts of the device (1) are constructed so as to operate in analog manner.

**Revendications**

1. Dispositif de compensation des harmoniques supérieurs et/ou du facteur de puissance d'une charge non linéaire (18) connectée à un réseau de tension alternative (2), ledit dispositif (1) comprenant un capteur de courant (8) monté en série avec la charge (18), une unité de traitement de signal (19) à deux entrées, et une unité de puissance (3), la première entrée de l'unité de traitement de signal (19) étant connectée à la sortie du capteur de courant (8), et la tension de charge ($v_L$) décroissante au niveau de la charge (18) étant transmise à la deuxième entrée de l'unité de traitement de signal (19), et la sortie de l'unité de traitement de signal (18) étant connectée à l'entrée de l'unité de puissance (3), et l'unité de puissance (3) délivrant, à sa sortie, un signal de correction (e(t)) pour compenser les harmoniques supérieurs et/ou le facteur de puissance, caractérisé en ce que le capteur de courant (8) est disposé juste avant la charge (18) et mesure le courant de charge ($i_L$), en ce que l'unité de traitement de signal (19) comprend des premiers moyens pour produire la composante de quadrature ($i^*_{L2}$) de la fréquence de base du courant de charge ($i_L$) ainsi que des deuxièmes moyens pour produire les harmoniques supérieurs du courant de charge ($i_L$), en ce que dans l'unité de puissance (3) sont prévus des troisièmes moyens qui fournissent, à la sortie de l'unité de puissance (3), la somme à puissance amplifiée des deux signaux issus des premiers et deuxièmes moyens, et en ce que le signal de correction (e(t)) est introduit entre le réseau de tension alternative (2) et le capteur de courant (8).

2. Dispositif selon la revendication 1, caractérisé en ce que les premiers moyens comprennent un premier multiplicateur (14), un premier étage consécutif de formation de moyenne (15), un deuxième multiplicateur consécutif et un circuit générateur d'oscillations de référence (11), ledit circuit générateur d'oscillations de référence (11) fournissant, à deux sorties, l'oscillation de base de réseau déphasée de 90° ainsi que la valeur de celle-ci multipliée par le facteur 2, en ce que le premier multiplicateur (14) est connecté, par sa première entrée, à la première entrée de l'unité de traitement de signal (19) et, par sa deuxième entrée, à la première sortie du circuit générateur d'oscillations de référence (11), en ce que la sortie du premier multiplicateur (14) est connectée à l'entrée du premier étage de formation de moyenne (15), en ce que la sortie du premier étage de formation de moyenne (15) est connectée à la première entrée du deuxième multiplicateur (16), en ce que la deuxième entrée du deuxième multiplicateur (16) est connectée à la deuxième sortie du circuit générateur d'oscillations de référence (11), et en ce que l'entrée du circuit générateur d'oscillations de référence (11) est connectée à la deuxième entrée de l'unité de traitement de signal (19).

3. Dispositif selon la revendication 2, caractérisé en ce que les deuxièmes moyens comprennent un troisième multiplicateur (10), un deuxième étage consécutif de formation de moyenne (12), un quatrième multiplicateur consécutif (13) ainsi qu'un additionneur (17) et un soustracteur (9), en ce que le circuit générateur d'oscillations de référence (11) fournit, à deux autres sorties, l'oscillation de base de réseau ainsi que la valeur de celle-ci multipliée par le facteur 2, en ce que le troisième multiplicateur (10) est connecté, par sa première entrée, à la première entrée de l'unité de traitement de signal (19) et, par sa deuxième entrée, à la troisième sortie du circuit générateur d'oscillations de référence (11), en ce que la sortie du troisième multiplicateur (10) est connectée à l'entrée du deuxième étage de formation de moyenne (12), en ce que la sortie du deuxième étage de formation de moyenne (12) est connectée à la première entrée du quatrième multiplicateur (13), en ce que la deuxième entrée du quatrième multiplicateur (13) est connectée à la quatrième sortie du circuit générateur d'oscillations de référence (11), en ce que la sortie du quatrième multiplicateur (13) est connectée à l'une des entrées de l'additionneur (17), en ce que l'autre entrée de l'additionneur (17) est connectée à la sortie du deuxième multiplicateur (16), et en ce que le soustracteur (9) est connecté, par l'une de ses entrées, à l'une des entrées de l'unité de traitement de signal (19) et, par son autre entrée, à la sortie de l'additionneur (17).

4. Dispositif selon la revendication 3, caractérisé en ce que les troisièmes moyens comprennent deux amplificateurs de courant (4 et 7) et un deuxième additionneur (5), en ce que les deux entrées du deuxième additionneur (5) sont connectées aux sorties des amplificateurs de courant (4, 7), en ce que l'entrée de l'un des amplificateurs de courant (4) est connectée à la sortie du deuxième additionneur (9) et l'entrée de l'autre amplificateur de courant (7) l'est à la sortie du deuxième multiplicateur (16), et en ce que la sortie du deuxième additionneur (5) communique avec la sortie de l'unité de puissance (3).

5. Dispositif selon l'une des revendications 1 à 4, caractérisé en ce que les différentes parties de circuit du dispositif (1) sont conçues sous la forme de parties à fonctionnement analogique.

FIGUR

EP 0 664 597 B1